# EUROPÄISCHE PATENTANMELDUNG

(11) **EP 0 924 916 A2**
(43) Veröffentlichungstag der Anmeldung: **23.06.1999**
(21) Anmeldenummer: 98123291.1
(22) Anmeldetag: 07.12.1998
(51) Int. Cl.: H04M 3/42, H04Q 7/22

(54) **Verfahren und Telekommunikationsnetz zum Informationsaustausch zwischen einem Teilnehmer und einem Servicedienst**

(30) Priorität: 19.12.1997 DE 19756851
(71) Anmelder: SIEMENS AKTIENGESELLSCHAFT, 80333 München (DE)
(72) Erfinder: Wieser, Stefan, 2552 Hirtenberg (AT)

(57) **Zusammenfassung**

Verfahren und Telekommunikationsnetz (NET) zum Informationsaustausch zwischen einem Teilnehmer (TEN) und einem Servicedienst (SER), dem eine Ortsinformation (OIN) bezüglich des Aufenthaltsortes des Endgerätes (EG1, EG2, EG3) des Teilnehmers zur Verfügung steht. Bei diesem Verfahren bzw. bei einem solchen Telekommunikationsnetz übermittelt der Teilnehmer (TEN) nach Herstellen einer Verbindung zu dem Servicedienst (SER) an diesen einen Suchbegriff (SUF), der Servicedienst durchsucht eine Datenbank (DBA) unter Benutzung des Suchbegriffs, verknüpft mit der Ortsinformation und das Suchergebnis (SES) wird an den Teilnehmer übermittelt.

## Beschreibung

Die Erfindung bezieht sich auf ein Verfahren zum Informationsaustausch zwischen einem Teilnehmer eines Telekommunikationsnetzes und einem Servicedienst, wobei dem Servicedienst eine Ortsinformation bezüglich des Aufenthaltsortes des Endgerätes des Teilnehmers zur Verfügung steht, sowie auf ein Telekommunikationsnetz mit einem diesem zugeordneten Servicedienst.

An Diensten, welche Teilnehmer eines Telefonnetzes, seien es Teilnehmer eines Fest- oder Mobilfunknetzes, auf Anfrage Auskunft z.B. über Rufnummern und/oder Adressen anderer Teilnehmer geben, besteht seit jeher großes Interesse. Der übliche Verfahrensablauf beinhaltet ein Anrufen des Dienstes und nach Herstellen der Verbindung eine Anfrage an den Dienst. Aufgrund eines Suchbegriffes, z.B. Name eines Teilnehmers, wird dann seitens des Dienstes dem Teilnehmer ein Suchergebnis mitgeteilt. Der beschriebene Ablauf kann unter Zuhilfenahme eines Operators oder, z.B. sprachgesteuert automatisch ablaufen.

Ein Problem liegt bei diesem bekannten Verfahrensablauf darin, daß ein Suchbegriff oft zu einer kaum übersehbaren Vielfalt an möglichen Ergebnissen führt. Beispielsweise führt ein Suchbegriff wie 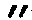 Arzt" oder 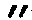 Rechtsanwalt" zu hunderten bis tausenden möglichen Ergebnissen. Ein gezieltes Einengen des Suchergebnisses durch eingrenzende Fragen seitens des Dienstes, führt zwar meist tatsächlich zu einer eingeschränkten Menge an Suchergebnissen, ist jedoch auch recht aufwendig. Dies unabhängig davon, ob das gesamte Verfahren nur auf dem Weg über Sprache abgewickelt oder ganz oder teilweise unter Zuhilfenahme eines Kurznachrichten-Dienstes, wie beispielsweise GSM-System des SMS-Dienstes ( 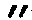 Short Mail Service").

Eine Aufgabe der Erfindung liegt darin, den Teilnehmer Suchergebnisse auf rasche und ökonomische Weise zur Verfügung zu stellen.

Diese Aufgabe wird, ausgehend von einem Verfahren der eingangs genannten Art, erfindungsgemäß dadurch gelöst, daß der Teilnehmer nach Herstellen einer Verbindung zu dem Servicedienst an diesen einen Suchbegriff übermittelt, seitens des Servicedienstes eine Datenbank unter Benutzung des Suchbegriffs, verknüpft mit der Ortsinformation, durchsucht wird, und das Suchergebnis an den Teilnehmer übermittelt wird.

Dank der erfindungsgemäßen Verknüpfung der Ortsinformation mit dem Suchbegriff ergibt sich ein Fortfall von in den meisten Fällen nicht benötigter Information, sodaß der gesamte Suchvorgang rascher und für den Teilnehmer bequemer abläuft.

Eine zweckmäßige Variante sieht vor, daß nach Herstellen der Verbindung bei dem Servicedienst die dem Teilnehmer zugehörige Ortsinformation ermittelt wird, der Teilnehmer den Suchbegriff an einen Operator des Servicedienstes in Sprache übermittelt, der Operator den Suchbegriff zusammen mit der ermittelten Ortsinformation in die Datenbank eingibt, und sodann das von der Datenbank ausgegeben Ergebnis ganz oder teilweise an den Teilnehmer übermittelt. Diese Variante ist sehr flexibel und kann dem Teilnehmer noch dazu das Gefühl persönlicher Betreuung geben.

Andererseits ist es sehr ökonomisch, daß der Teilnehmer (TE1, TE2, TE3) den Suchbegriff digital und/oder alpha-numerisch an den Servicedienst übermittelt und/oder daß der Servicedienst das Ergebnis der Suche digital und/oder alpha-numerisch an den Teilnehmer übermittelt.

In jedem Fall kann auch der Servicedienst das Ergebnis der Suche digital und/oder alpha-numerisch an den Teilnehmer übermitteln.

Dabei bietet sich als einfach zu realisierende Variante an, daß die Übermittlung von Suchbegriff und/oder Suchergebnis im Rahmen eines Kurznachrichten-Dienstes des Netzes erfolgt.

Bei Festnetzen ist es angebracht, daß die Ortsinformationen in einem Amt eines Festnetzes, den Teilnehmerrufnummern zugeordnet abgespeichert sind und bei jedem abgehenden und/oder einlangenden Ruf zusammen mit den übrigen Teilnehmerdaten dem Servicedienst zur Verfügung gestellt werden.

Hingegen liegt bei Mobilfunknetzen eine günstige Ausgestaltung darin, daß die Ortsinformationen bei Teilnehmern eines Mobilfunknetzes der geographischen Lage der Basisstationen der Funkzellen entsprechen.

Eine höhere Genauigkeit der Ortsbestimmung läßt sich erreichen, falls die Ortsinformation bei Teilnehmern eines Mobilfunknetzes unter Zuhilfenahme der Empfangsdaten mehrerer Basisstationen ermittelt wird.

Eine von dem Netz unabhängige und genaue Ortsbestimmung zeichnet sich dadurch aus, daß die Ortsinformation seitens des Teilnehmerendgerätes mit Hilfe eines Navigationssystems, insbesondere Satellitennavigationssystems ermittelt wird.

Von besonderem Vorteil kann es auch sein, wenn die Datenbank unter zusätzlicher Verknüpfung des Suchbegriffes und der Ortsinformation mit der aktuellen Zeit durchsucht wird, da sich hierdurch weitere, nicht benötigte, da nicht aktuelle Informationen unterscheiden lassen.

Zusätzliche Bequemlichkeit für den Teilnehmer läßt sich erreichen, falls das an den Teilnehmer übermittelte Suchergebnis eine Rufnummer ist, welche im Endgerät des Teilnehmers zumindest vorübergehend abgespeichert wird und daraufhin durch Eingabe eines einfachen Befehles, z.B. Drücken einer Taste, zum Anwählen eines anderen Teilnehmers mit dieser Rufnummer verwendet.

In den meisten Fällen wird es günstig sein, wenn als Suchbegriff ein Name und/oder eine Adresse verwendet wird.

Es ist auch anzuraten, daß seitens des Servicedienstes eine Aufforderung an den Teilnehmer ergeht, konkretere und/oder zusätzliche Suchbegriffe zu übermitteln, falls das Suchergebnis leer oder für eine Übermittlung zu umfangreich ist, da sich auf diese Weise eine weitere Systematik in die Suche einbringen läßt.

Das Verfahren kann noch mehr der Praxis angepaßt werden, wenn in dem Servicedienst seitens des Teilnehmers gesprochen übermittelte Suchbegriffe in digitale Form umgewandelt werden und/oder in dem Servicedienst digital vorliegende Suchergebnisse in Sprache umgewandelt werden.

Die gestellte Aufgabe wird auch mit einem Telekommunikationsnetz der zu Beginn angesprochenen Gattung gelöst, bei welchem gemäß der Erfindung der Servicedienst dazu eingerichtet ist, nach Übermittlung eines Suchbegriffes durch einen Teilnehmer unter Benutzung dieses Suchbegriffes, verknüpft mit der Ortsinformation in die Datenbank mit einem Suchbefehl einzugeben und das Suchergebnis an den Teilnehmer zu übermitteln.

Die damit erzielbaren Vorteile wurden bereits im Zusammenhang mit dem Verfahren erwähnt.

Weitere zweckmäßige Ausgestaltungen des erfindungsgemäßen Telekommunikationsnetzes entsprechen im wesentlichen den vorhin im Zusammenhang mit dem Verfahren genannten Merkmalen bzw., Merkmalskombinationen.

Die Erfindung samt weiterer Vorteile ist im folgenden anhand beispielsweiser Ausführungsformen näher erläutert, die in der Zeichnung veranschaulicht sind. In dieser zeigen
Fig. 1 ein Telekommunikationsnetz nach der Erfindung, mit mehreren Teilnehmern und einem Servicedienst, in schematischer Darstellung und
Fig. 2 den beispielhaften Ablauf des Verfahrens nach der Erfindung.

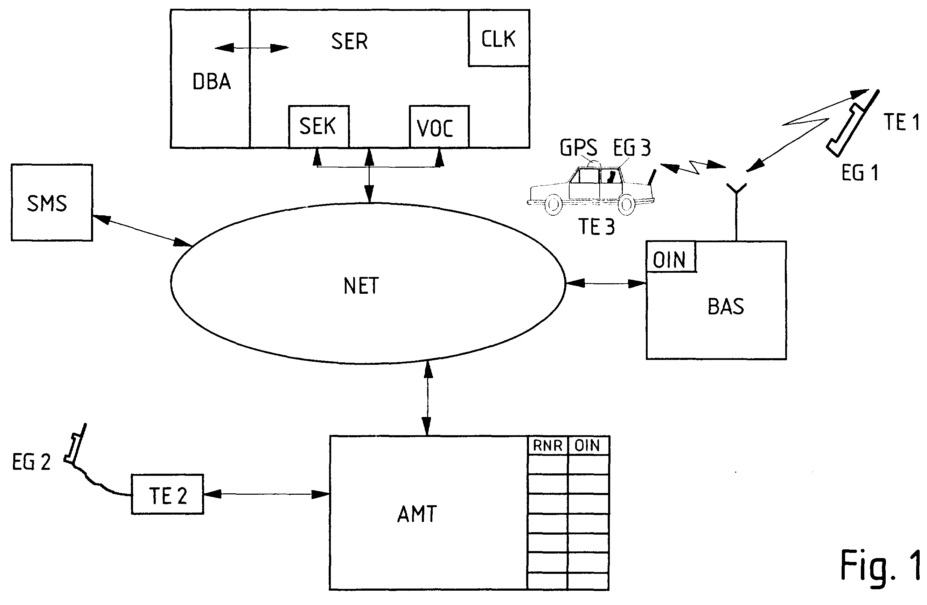

In Fig. 1 ist ein Telekommunikationsnetz NET angedeutet, bei dem es sich um ein Festnetz, um ein Mobilfunknetz oder um ein über spezifische Netze übergeordnetes Netz handeln kann. Teilnehmer dieses Netzes können beispielsweise Mobilfunkteilnehmer TE 1 und TE 3 mit Endgeräten EG 1 und EG 3 sein, die mit einer jeweiligen Basisstation BAS in Verbindung stehen. Endgerät EG 1 sei beispielsweise ein sogenanntes Handy, wogegen das Endgerät EG 3 in ein Fahrzeug eingebaut ist, und diesem Endgerät EG 3 überdies ein Satellitennavigationsempfänger GPS zugeordnet ist. Solche Empfänger sind in modernen Fahrzeugen bereits oft serienmäßig vorhanden.

Ein weiterer Teilnehmer TE 2 könne über ein Amt AMT mit dem Netz und anderen Teilnehmern in Verbindung treten. Das Endgerät des Teilnehmers TE 2 ist mit EG 2 bezeichnet.

Bei diesem Beispiel ist außer einem Kurznachrichtendienst SMS (Short Mail Service) dem Netz auch ein Servicedienst SER zugeordnet. Dieser Servicedienst weist einen Vocoder VOC, eine Spracherkennung SEK sowie eine Datenbank DBA auf.

Wesentlich für die Erfindung ist nun, daß bei einem Anruf eines Netzteilnehmers in dem Servicedienst SER diesem Dienst eine Ortsinformation hinsichtlich des Aufenthaltsortes des Endgerätes des jeweiligen Teilnehmers zur Verfügung steht. Eine solche Ortsinformation kann beispielsweise zugleich mit der Signalisierung von dem Amt AMT durchgegeben werden, wobei in dem Amt - wie in Fig. 1 skizziert - ein Speicher mit der Zuordnung von Rufnummern RNR zu Ortsinformationen OIN vorgesehen ist. Die Ortsinformation OIN kann aber beispielsweise auch von der Basisstation BAS eines mobilen Teilnehmers stammen, wobei die in der Basisstation BAS gespeicherte Ortsinformation OIN in diesem Fall für die gesamte Funkzelle stellvertretend an den Servicedienst SER weitergegeben wird. Will man eine genauere Ortsinformation hinsichtlich des Endgerätes EG 1 eines mobilen Teilnehmers TE 1, so bietet sich natürlich auch die Möglichkeit an, diese Ortsinformation aus den Empfangsdaten von beispielsweise drei Basisstationen BAS zu berechnen. Derartige Verfahren sind dem Nachrichtentechniker bekannt und auch nicht Gegenstand der Erfindung.

Eine weitere Möglichkeit zur Ermittlung einer sehr genauen Ortsinformation besteht darin, dem Endgerät EG 3 eines Teilnehmers TE 3 einen Satellitennavigationsempfänger GPS zuzuordnen. Ein solcher Empfänger kann laufend die genauen Koordinaten ermitteln und diese an das Endgerät EG 3 weitergeben, welches wiederum mit Hilfe einer geeigneten Signalisierung diese Ortsinformation über das Netz an den Servicedienst SER übermittelt.

Wenn nun einer der Teilnehmer nach Herstellen einer Verbindung an den Servicedienst einen Suchbegriff SUF übermittelt, d.h. eine Frage stellt, wird in dem Servicedienst dieser Suchbegriff, verknüpft mit der Ortsinformation OIN des Teilnehmers, in eine Datenbank DBA eingegeben, die aus diesen Daten ein Suchergebnis SES ermittelt, das nun wiederum an den Teilnehmer gesandt wird.

Der gesamte Ablauf dieses Verfahrens kann über Sprache erfolgen, und in dem Servicedienst kann ein Operator anwesend sein, der die Suchbegriffe des Teilnehmers entgegennimmt, sie in die Datenbank eingibt und die Suchergebnisse dem Teilnehmer wieder gesprochen übermittelt. Eine alternative Möglichkeit besteht darin, daß der Verkehr zwischen dem Teilnehmer und dem Servicedienst zwar in Sprache abläuft, in dem Servicedienst jedoch eine Umwandlung von Sprache in einer Spracherkennung SEK in digitale Information erfolgt, die dann automatisch an die Datenbank DBA weitergegeben wird. Auch das Ergebnis der Datenbanksuche wird dann digital ausgegeben, jedoch in einem Vocoder VOC in Sprache umgesetzt und zu dem Teilnehmer weitergeleitet.

Als weitere Möglichkeit ist der Einsatz eines Kurznachrichtendienstes, wie beispielsweise des SMS-Dienstes im GSM-System möglich. Bei einem solchen Dienst werden neben der eigentlichen, z.B. gesprochenen Nutzinformation Kurznachrichten übermittelt, was beispielsweise auf besonderen Kanälen des Systems erfolgen kann.

Das erfindungsgemäße Verfahren hat nun den Vorteil, daß der Benutzer keine unnützen Suchergebnisse erhält, aus welchen er erst mühsam die ihn interessierenden ausfiltern muß, wobei eine große Anzahl von Suchergebnissen in praktikabler Weise auch gar nicht an den Teilnehmer übermittelbar wäre. Wenn beispielsweise ein Teilnehmer als Suchbegriff 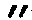 Arzt" eingibt, so wird durch Verknüpfung mit der teilnehmerspezifischen Ortsinformation OIN aus der Datenbank DBA Adressen- oder Telefonnummernmaterial gesucht, das lediglich in Nähe des Teilnehmers befindliche Ärzte betrifft. Eine weitere Hilfe kann die Eingabe der aktuellen Zeit aus einer Uhr CLK sein, die in Fig. 1 in dem Servicedienst SER als Block angedeutet ist. Um bei dem Beispiel mit der Suche nach einem Arzt zu bleiben, könnte in diesem Fall dem Teilnehmer die Adresse (Telefonnummer) jenes Arztes oder jener Ärzte mitgeteilt werden, die zu diesem Zeitpunkt (Wochentag, Stunde) Dienst haben. Sinngemäß gleiches gilt natürlich für andere Suchbegriffe, bei welchen Dienst- oder Öffnungszeiten eine Rolle spielen, wie z.B. bei Apotheken, Kraftfahrzeugwerkstätten, Pannendiensten, etc.

Wenn dem Teilnehmer als Suchergebnis eine Telefonnummer, z.B. eines Arztes mitgeteilt wird, kann gemäß der Erfindung auch vorgesehen sein, daß diese Rufnummer RNR in dem Endgerät des Teilnehmers vorübergehend abgespeichert wird, sodaß sie durch beispielsweise einfachen Tastendruck aufgerufen und zur Anwahl des Teilnehmers mit dieser Rufnummer RNR, z.B. eines Arztes, verwendet werden kann. Hierdurch ergibt sich eine besondere Bequemlichkeit für den Teilnehmer, die auch in Notsituationen eine zusätzliche Sicherheit bedeutet, da sich eine manuelle Eingabe der Rufnummer in einer Streßsituation erübrigt. Falls nach Eingabe eines Suchbegriffes SUF in die Datenbank DBA entweder kein Suchergebnis vorliegt oder andererseits das Suchergebnis sehr umfangreich ist, sodaß die Übermittlung an den Teilnehmer bzw. die Auswertung durch diesen nicht praktikabel erscheint, kann seitens des Servicedienstes SER eine Aufforderung an den Teilnehmer zur Präzisierung des Suchbegriffes bzw. zur Eingabe weiterer einengender Suchbegriffe ergehen.

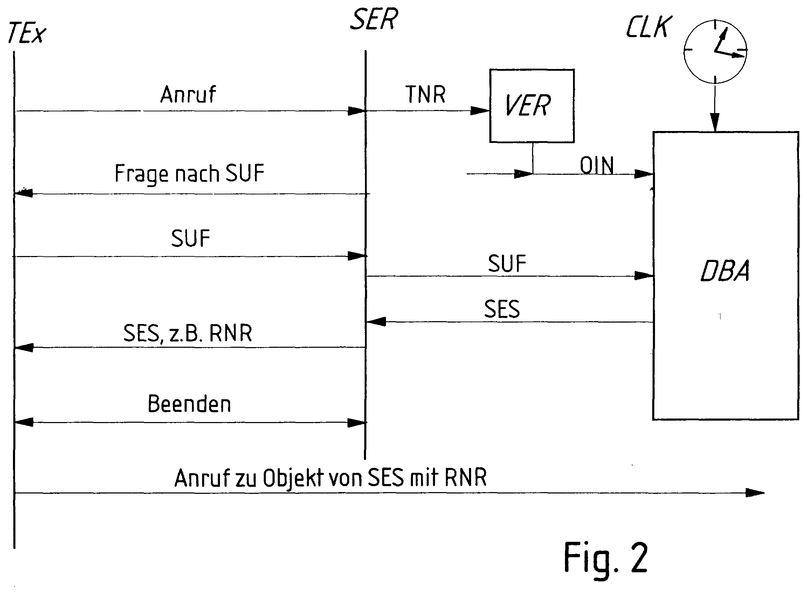

Unter Bezugnahme auf Fig. 2 ist nun zusätzlich ein möglicher Verfahrensablauf zwischen einem Teilnehmer TEx und einer Servicestelle SER veranschaulicht. Gegenstand dieses Diagramms ist nicht die genaue Signalisierung, da diese nicht Gegenstand der Erfindung und außerdem systemspezifisch ist, sondern eben der prinzipielle Ablauf. Der Teilnehmer TEx tätigt einen Anruf zur Servicestelle SER, und dort wird nun aus der Teilnehmerrufnummer TNR unter Zuhilfenahme eines Verzeichnisses VER die Ortsinformation OIN betreffend das Endgerät des Teilnehmers TEx ermittelt und gleich an die Datenbank DBA eingegeben. Überdies steht der Datenbank DBA seitens einer Uhr CLK die aktuelle Zeitinformation zur Verfügung.

Nach Durchstellen des Anrufes wird seitens des Servicedienstes üblicherweise die Frage nach einer Suchinformation an den Teilnehmer geleitet, wobei erläuternde Bemerkungen zum Verfahrensablauf gegeben werden können. Der Teilnehmer TEx gibt nun die Suchinformation SUF gesprochen oder digital bzw. alpha-numerisch ein, und diese Suchinformation SUF wird nun, wie weiter oben bereits beschrieben, in die Datenbank DBA eingegeben, die ihrerseits das Suchergebnis SES liefert. Dieses Suchergebnis SES, das z.B. eine Rufnummer RNR eines dritten gesuchten Teilnehmers sein kann, wird nun an den Teilnehmer TEx übermittelt. Zu diesem Zeitpunkt kann dann der Servicedienst SER die Verbindung beenden, bzw. kann die Verbindung durch den Teilnehmer TEx beendet werden, falls keine weiteren Fragen mehr anliegen.

Der Teilnehmer TEx kann dann, dies ist in Fig. 2 ganz unten gezeigt, unter Verwendung der Rufnummer RNR das Objekt des Suchergebnisses SES anwählen, was auch automatisch oder halbautomatisch erfolgen kann.

## Patentansprüche

1. Verfahren zum Informationsaustausch zwischen einem Teilnehmer (TEN) eines Telekommunikationsnetzes (NET) und einem Servicedienst (SER), wobei dem Servicedienst eine Ortsinformation (OIN) bezüglich des Aufenthaltsortes des Endgerätes (EG1, EG2, EG3) des Teilnehmers zur Verfügung steht,
**dadurch gekennzeichnet,**
daß der Teilnehmer (TEN) nach Herstellen einer Verbindung zu dem Servicedienst (SER) an diesen einen Suchbegriff (SUF) übermittelt, seitens des Servicedienstes eine Datenbank (DBA) unter Benutzung des Suchbegriffs, verknüpft mit der Ortsinformation, durchsucht wird und das Suchergebnis (SES) an den Teilnehmer übermittelt wird.

2. Verfahren nach Anspruch 1, **dadurch gekennzeichnet,** daß nach Herstellen der Verbindung bei dem Servicedienst die dem Teilnehmer (TEN) zugehörige Ortsinformation (OIN) ermittelt wird, der Teilnehmer (TEN) den Suchbegriff (SUF) an einen Operator des Servicedienstes in Sprache übermittelt, der Operator den Suchbegriff zusammen mit der ermittelten Ortsinformation in die Datenbank (DBA) eingibt, und sodann das von der Datenbank ausgegebene Ergebnis (SES) ganz oder teilweise an den Teilnehmer übermittelt.

3. Verfahren nach Anspruch 1, **dadurch gekennzeichnet,** daß der Teilnehmer (TE1, TE2, TE3) den Suchbegriff digital und/oder alpha-numerisch an den Servicedienst (SER) übermittelt.

4. Verfahren nach einem der Ansprüche 1 bis 3, **dadurch gekennzeichnet**, daß der Servicedienst (SER) das Ergebnis der Suche digital und/oder alpha-numerisch an den Teilnehmer (TE1, TE2, TE3) übermittelt.

5. Verfahren nach Anspruch 3 oder 4, **dadurch gekennzeichnet,** daß die Übermittlung von Suchbegriff und/oder Suchergebnis im Rahmen eines Kurznachrichten-Dienstes (SMS) des Netzes (NET) erfolgt.

6. Verfahren nach einem der Ansprüche 1 bis 5, **dadurch gekennzeichnet**, daß die Ortsinformationen (OIN) in einem Amt (AMT) eines Festnetzes (NET), den Teilnehmerrufnummern zugeordnet abgespeichert sind und bei jedem abgehenden und/oder einlangenden Ruf zusammen mit den übrigen Teilnehmerdaten dem Servicedienst (SER) zur Verfügung gestellt werden.

7. Verfahren nach einem der Ansprüche 1 bis 5, **dadurch gekennzeichnet,** daß die Ortsinformationen (OIN) bei Teilnehmern (TE1, TE3) eines Mobilfunknetzes der geographischen Lage der Basisstationen (BAS) der Funkzellen entsprechen.

8. Verfahren nach einem der Ansprüche 1 bis 5, **dadurch gekennzeichnet**, daß die Ortsinformation bei Teilnehmern eines Mobilfunknetzes unter Zuhilfenahme der Empfangsdaten mehrerer Basisstationen ermittelt wird.

9. Verfahren nach einem der Ansprüche 1 bis 5, **dadurch gekennzeichnet,** daß die Ortsinformation seitens des Teilnehmerendgerätes (EG3) mit Hilfe eines Navigationssystems, insbesondere Satellitennavigationssystems ermittelt wird.

10. Verfahren nach einem der Ansprüche 1 bis 9, **dadurch gekennzeichnet,** daß die Datenbank (DBA) unter zusätzlicher Verknüpfung des Suchbegriffes (SUF) und der Ortsinformation (OIN) mit der aktuellen Zeit durchsucht wird.

11. Verfahren nach einem der Ansprüche 1 bis 10, **dadurch gekennzeichnet,** daß das an den Teilnehmer (TEN) übermittelte Suchergebnis eine Rufnummer (RNR) ist, welche im Endgerät (EGE) des Teilnehmers zumindest vorübergehend abgespeichert wird und daraufhin durch Eingabe eines einfachen Befehles, z.B. Drücken einer Taste, zum Anwählen eines anderen Teilnehmers mit dieser Rufnummer verwendet.

12. Verfahren nach einem der Ansprüche 1 bis 11, **dadurch gekennzeichnet,** daß als Suchbegriff ein Name und/oder eine Adresse verwendet wird.

13. Verfahren nach einem der Ansprüche 1 bis 12, **dadurch gekennzeichnet,** daß seitens des Servicedienstes (SER) eine Aufforderung an den Teilnehmer (TE1...) ergeht, konkretere und/oder zusätzliche Suchbegriffe zu übermitteln, falls das Suchergebnis leer oder für eine Übermittlung zu umfangreich ist.

14. Verfahren nach einem der Ansprüche 1 bis 13, **dadurch gekennzeichnet,** daß in dem Servicedienst (SER) seitens des Teilnehmers (TEN) gesprochen übermittelte Suchbegriffe (SUF) in digitale Form umgewandelt werden.

15. Verfahren nach einem der Ansprüche 1 bis 14, **dadurch gekennzeichnet,** daß in dem Servicedienst (SER) digital vorliegende Suchergebnisse in Sprache umgewandelt werden.

16. Telekommunikationsnetz (NET) mit einem diesem zugeordneten Servicedienst (SER), dem eine Ortsinformation (OIN) betreffend den Aufenthaltsort des Endgerätes (EG1, EG2, EG3) des Teilnehmers zur Verfügung steht,
**dadurch gekennzeichnet,**
daß der Servicedienst (SER) dazu eingerichtet ist, nach Übermittlung eines Suchbegriffes (SUF) durch einen Teilnehmer (TEN) unter Benutzung dieses Suchbegriffes, verknüpft mit der Ortsinformation (OIN) in die Datenbank (DBA) mit einem Suchbefehl einzugeben und das Suchergebnis (SES) an den Teilnehmer zu übermitteln.

17. Telekommunikationsnetz (NET) nach Anspruch 16**, dadurch gekennzeichnet,** daß das Netz (NET) dazu eingerichtet ist, nach Herstellen der Verbindung zwischen Teilnehmer (TE1, TE2, TE3) und Servicedienst (SER) die dem Teilnehmer zugehörige Ortsinformation (OIN) an den Servicedienst zu übermitteln.

18. Telekommunikationsnetz (NET) nach Anspruch 16 oder 17, **dadurch gekennzeichnet,** daß der Servicedienst (SER) dazu eingerichtet ist, einen in Sprache übermittelten Suchbegriff (SUF) zu verarbeiten.

19. Telekommunikationsnetz (NET) nach Anspruch 18**, dadurch gekennzeichnet,** daß der Servicedienst (SER) für die Bedienung durch einen Operator eingerichtet ist.

20. Telekommunikationsnetz (NET) nach einem der Ansprüche 16 bis 19 **dadurch gekennzeichnet,** daß in dem Servicedienst (SER) eine Spracherkennungseinheit (SEK) für die Umwandlung seitens des Teilnehmers (TEN) gesprochen übermittelter Suchbegriffe (SUF) in digitale Form vorgesehen ist.

21. Telekommunikationsnetz (NET) nach einem der Ansprüche 16 bis 20, **dadurch gekennzeichnet,** daß in dem Servicedienst (SER) ein Vocoder (VOC) für die Umwandlung digital vorliegender Suchergebnisse in Sprache vorgesehen ist.

22. Telekommunikationsnetz (NET) nach einem der Ansprüche 16 bis 21, **dadurch gekennzeichnet,** daß das Netz (NET) einen Kurznachrichtendienst (SMS) besitzt, über welchen die Übermittlung von Suchbegriffen und/oder Suchergebnissen durchführbar ist.

23. Telekommunikationsnetz (NET) nach einem der Ansprüche 16 bis 22, **dadurch gekennzeichnet,** daß die Ortsinformationen (OIN) in einem Amt (AMT) eines Festnetzes, den Teilnehmerrufnummern zugeordnet abgespeichert sind und das Amt dazu eingerichtet ist, bei jedem abgehenden und/oder einlangenden Ruf, eine Ortsinformation (OIN) zusammen mit den übrigen Teilnehmerdaten dem Servicedienst (SER) zur Verfügung zu stellen.

24. Telekommunikationsnetz (NET) nach einem der Ansprüche 16 bis 23, **dadurch gekennzeichnet,** daß die Ortsinformation (OIN) der Teilnehmer (TE1, TE3) eines Mobilfunknetzes der geographischen Lage der Basisstationen (BAS) der Funkzellen entsprechende gewählt sind.

25. Telekommunikationsnetz (NET) nach einem der Ansprüche 16 bis 24, **dadurch gekennzeichnet,** daß einem Teilnehmerendgerät (EG3) ein Navigationsempfänger, insbesondere Satellitennavigationsempfänger (GPS) zur Ermittlung der Ortsinformation (OIN) zugeordnet ist.

26. Telekommunikationsnetz (NET) nach einem der Ansprüche 16 bis 25, **dadurch gekennzeichnet,** daß der Servicedienst dazu eingerichtet ist, den Suchbegriff (SUF) und die Ortsinformation (OIN) zusätzlich verknüpft mit der aktuellen Zeit/Datum in die Datenbank (DBA) einzugeben.

27. Telekommunikationsnetz (NET) nach einem der Ansprüche 16 bis 26, **dadurch gekennzeichnet,** daß das übermittelte Suchergebnis (SUF) eine Rufnummer (RNR) ist, die in dem Endgerät (EG1, EG2, EG3) des Teilnehmers zumindest vorübergehend abspeicherbar und auf Befehl des Teilnehmers (TE1, TE2, TE3) zum automatischen Anwählen eines anderen Teilnehmers heranziehbar ist.

28. Telekommunikationsnetz (NET) nach einem der Ansprüche 16 bis 27, **dadurch gekennzeichnet,** daß der Suchbegriff (SUF) ein Name und/oder eine Adresse ist.

29. Telekommunikationsnetz (NET) nach einem der Ansprüche 16 bis 28, **dadurch gekennzeichnet,** daß der Servicedienst (SER) zur Abgabe einer entsprechenden Aufforderung an den Teilnehmer (TE1, TE2, TE3) eingerichtet ist, falls das Suchergebnis leer oder für eine Übermittlung zu umfangreich ist.
